# EUROPEAN PATENT SPECIFICATION

(11) **EP 3 431 814 B1**
(45) Date of publication and mention of the grant of the patent: **30.09.2020**
(21) Application number: 17766451.3
(22) Date of filing: 07.03.2017
(51) Int. Cl.: F16H 7/08, F16B 33/02

(54) **CHAIN TENSIONER**
KETTENSPANNER
TENDEUR DE CHAÎNE

(30) Priority: 17.03.2016 JP 2016053467
(43) Date of publication of application: 23.01.2019
(73) Proprietor: NTN Corporation, Osaka-shi, Osaka 550-0003 (JP)
(72) Inventor: ONIMARU, Kouichi, Iwata-shi Shizuoka 438-8510 (JP); MAENO, Eiji, Iwata-shi Shizuoka 438-8510 (JP)
(74) Representative: Grünecker Patent- und Rechtsanwälte PartG mbB
(86) International application number: PCT/JP2017/008938
(87) International publication number: WO 2017/159449

(56) References cited:
- WO-A1-2009/075219
- JP-A- H09 291 991
- JP-A- H10 110 795
- JP-A- H10 132 040
- JP-A- 2002 156 013
- JP-A- 2007 032 603
- JP-A- 2010 242 788
- JP-A- 2011 021 643
- US-A- 4 842 464

## Description

### TECHNICAL FIELD

The present invention relates to a chain tensioner for keeping constant the tension of e.g., a chain for driving the camshaft(s) of an engine, particularly to a chain tensioner configured to absorb tension fluctuations of the chain by the hydraulic damper action, and capable of functioning in a stable manner even when not performing the hydraulic damper action. Such a chain tensioner is disclosed in WO2009075219A.

### BACKGROUND ART

For example, the below-identified Patent document 1 discloses a conventional chain tensioner for keeping constant the tension of a power transmission chain.

The chain tensioner of Patent document 1 includes a tubular plunger having a bottom, and pressing a slipper kept in contact with the loose side of a chain in the direction in which the chain is tensioned; and a screw rod disposed inside of the plunger.

The plunger is inserted in a cylinder chamber defined in a housing. A return spring mounted between the screw rod and the plunger biases the plunger in the direction in which the plunger protrudes from the cylinder chamber.

The screw rod has external threads formed on its outer periphery, and threadedly engaged with internal threads formed on the inner surface of the plunger. When the chain is loosened, the plunger protrudes from the cylinder chamber of the housing while rotating relative to the screw rod due to the component force applied to the contact portions of the flanks of the internal and external threads.

As a result thereof, the slipper is pressed toward the chain, thereby preventing the tension of the chain from decreasing due to the looseness of the chain.

Generally, a chain tensioner used to retain the tension of a chain for driving the camshaft(s) of an engine is configured such that oil supplied from the engine is introduced into a pressure chamber defined in the plunger, and when the pressure in the pressure chamber exceeds the pressure in the oil supply passage, the pressure chamber is closed, thereby generating a hydraulic damper force. This hydraulic damper force absorbs tension fluctuations of the chain, so that the tension of the chain is kept constant by the chain tensioner.

In n such a chain tensioner, since no oil is supplied to the pressure chamber while the engine is stopped, the plunger is pushed into the cylinder chamber.

Therefore, many such chain tensioners include a detent mechanism for preventing the plunger from being pushed in beyond a predetermined amount.

In the chain tensioner of Patent document 1, such a detent mechanism is constituted by setting the flank angles of "plunger-pushed-in-side flanks" of the internal threads on the plunger and the external threads on the outer periphery of the screw rod, and the flank angles of "plunger-protruding-side flanks" of the internal and external threads such that the former flank angles are different from the latter flank angles.

Specifically, the internal and external threads are serrated such that the flank angles of the plunger-protruding-side flanks of the internal and external threads are larger than the flank angles of the plunger-pushed-in-side flanks of the internal and external threads. Due to the engagement of the serrated internal and external threads with each other, when the plunger is pushed in, large resistance is applied to the relative rotation of the internal and external threads, thereby preventing the plunger from being pushed in.

As used herein, the plunger-pushed-in-side flanks refer to the surfaces of the internal and external threads configured to abut against each other when the plunger is pushed into the cylinder chamber, and the plunger-protruding side flanks refer to the surfaces of the internal and external threads configured to abut against each other when the plunger protrudes from the cylinder chamber.

### PRIOR ART DOCUMENTS

### PATENT DOCUMENTS

Patent document 1: Japanese Patent No. 3635188

### SUMMARY OF THE INVENTION

### PROBLEMS TO BE SOLVED BY THE INVENTION

In the chain tensioner of Patent document 1, the internal threads on the plunger, and the external threads on the outer periphery of the screw rod are designed to be identical in pitch to each other, but are not actually completely identical in pitch to each other. Namely, due to inevitable machining error, the internal threads tend to differ in pitch from the external threads, specifically, tends to be larger in pitch than the external threads.

Under such a situation, when the plunger protrudes from the cylinder chamber, the external threads of the screw rod move onto the starting ends (start portions) of the internal threads located closer to the closed end of the plunger while rotating relative to the internal threads of the plunger.

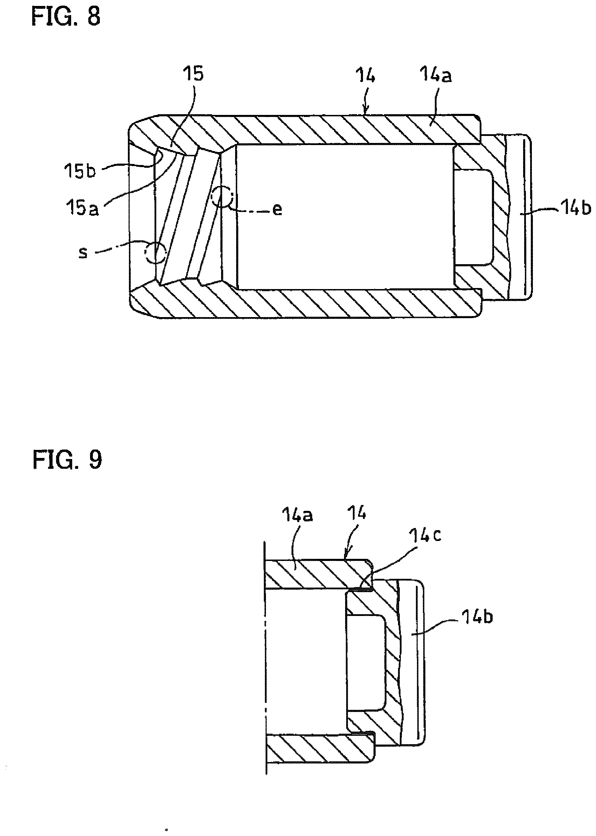

Both of the starting ends (see portions "s" and "e" in Fig. 8) of each internal thread, i.e., its ends closer, respectively, to the open and closed ends of the plunger, tend to be sharp, so that so-called machining burrs tend to occur on these ends.

When the external threads of the screw rod move onto the starting ends of the internal threads while rotating relative to the internal threads, if the plunger-protruding-side flanks of the screw rod are rough or have dents, the flanks of the internal and external threads in contact with each other may get caught on each other, thereby preventing the relative rotation of the screw rod and the plunger.

Therefore, especially while the oil supply from the engine is stopped, during which the force of the return spring is the only force that causes the plunger to protrude, the plunger might not be able to protrude in a smooth manner.

In such a situation, the chain tensioner cannot function in a stable manner. It is an object of the present invention to provide a chain tensioner of which the plunger smoothly protrudes so that the tension of a chain is stably retained by the chain tensioner, even while the oil supply from an engine is stopped, and thus the chain tensioner is not capable of performing the hydraulic damper function.

### MEANS FOR SOLVING THE PROBLEMS

In order to achieve the above object, the present invention provides a chain tensioner comprising: a chain tensioner comprising: a housing in which a cylinder chamber is defined such that one end of the cylinder chamber opens; a tubular plunger which includes a bottom, and an internal thread on an inner portion of the tubular plunger, and which is inserted in the cylinder chamber so as to be protrudable from the cylinder chamber; a screw rod including an external thread on an outer periphery of the screw rod, and disposed inside of the tubular plunger; a return spring disposed between the screw rod and the tubular plunger, and configured to bias the tubular plunger in a direction in which the tubular plunger protrudes from the cylinder chamber; a pressure chamber defined in a back portion of the tubular plunger within the cylinder chamber; an oil supply passage communicating with the pressure chamber; and a check valve configured to close the oil supply passage when a pressure in the pressure chamber is higher than a pressure in the oil supply passage, wherein each of the internal thread and the external thread has: a plunger-pushed-in-side flank configured to abut against the plunger-pushed-in-side flank of the other of the internal thread and the external thread when the tubular plunger is pushed into the cylinder chamber; and a plunger-protruding-side flank configured to abut against the plunger-protruding-side flank of the other of the internal thread and the external thread when the tubular plunger protrudes from the cylinder chamber, wherein the internal thread is serrated such that a flank angle of the plunger-pushed-in-side flank of the internal thread is larger than a flank angle of the plunger-protruding-side flank of the internal thread, wherein the external thread is serrated such that a flank angle of the plunger-pushed-in-side flank of the external thread is larger than a flank angle of the plunger-protruding-side flank of the external thread, wherein the serrated internal and external threads are threadedly engaged with each other, and characterized in that the internal thread of the tubular plunger has a pitch smaller than a pitch of the external thread of the screw rod.

In the chain tensioner, the flank angles of the plunger-pushed-in side flanks of the internal and external threads may be set at 64 to 76 degrees, and the flank angles of the plunger-protruding side flanks of the internal and external threads may be set at 6 to 16 degrees.

The plunger is preferably manufactured by forming the internal thread on a cold-forged member, and also is preferably made of SCM material (carbon steel for mechanical structure) or SCr material (chrome steel material) in view of costs and strength.

The plunger may be an integral member, or be constituted by two parts comprising a cylindrical member having an opening at one end of the cylindrical member; and a cap closing the opening of the cylindrical member. In view of productivity, the cap is preferably press-fitted and fixed to the cylindrical member, or welded and joined to the cylindrical member.

The screw rod is preferably made of SCM material or SCr material, too.

The present invention can be applied to both a chain tensioner mounted outside of an engine and a chain tensioner mounted inside of the engine.

### EFFECTS OF THE INVENTION

In the chain tensioner of the present invention, as described above, the pitch "a" of the internal thread of the plunger is set to be smaller than the pitch "b" of the external thread of the screw rod.

As a result thereof, when the plunger protrudes from the cylinder chamber, the starting end of the internal thread at the open end of the plunger always comes into contact with the external thread of the screw rod, and the plunger moves in the protruding direction in this state.

At this time, the screw rod is fixed or rotates at a predetermined position. Specifically, the plunger and the screw rod move relative to each other as follows: the external thread of the screw rod slides down on the inclined flank of the internal thread toward the starting end of the internal thread at the open end of the plunger while rotating relative to the internal thread of the plunger.

Therefore, even if the internal thread has a sharp starting end, and burrs are formed on the sharp starting end, the plunger can protrude from the cylinder chamber with no problem, thereby generating a plunger thrust force necessary for retaining chain tension even while the engine is stopped.

### BRIEF DESCRIPTION OF THE DRAWINGS

Fig. 1 is a schematic view of a chain system for driving camshafts.
Fig. 2 is a sectional view illustrating the detailed structure of a chain tensioner used in the chain system of Fig. 1.
Fig. 3 is an enlarged sectional view illustrating the engagement state in which internal threads in the plunger of the chain tensioner of Fig. 2 are engaged with external threads in the screw rod of the chain tensioner.
Fig. 4 is a sectional view illustrating the flank angles of the internal threads of the plunger, and the flank angles of the external threads of the screw rod.
Fig. 5 is an enlarged sectional view illustrating a modification of the internal threads of the plunger, (i.e., the internal threads formed with chamfers).
Fig. 6 is a sectional view illustrating a bulge (or bulges) formed on at least one of the internal threads (including no chamfers) of the plunger when the internal threads are formed by rolling.
Fig. 7 is a sectional view illustrating a bulge (or bulges) formed on at least one of the internal threads (including chamfers) of the plunger when the internal threads are formed by rolling.
Fig. 8 is a sectional view illustrating a modification of the plunger.
Fig. 9 is a sectional view illustrating another modification of the plunger.
Fig. 10 is a sectional view illustrating the detailed structure of a chain tensioner according to another embodiment of the present invention.

### BEST MODE FOR CARRYING OUT THE INVENTION

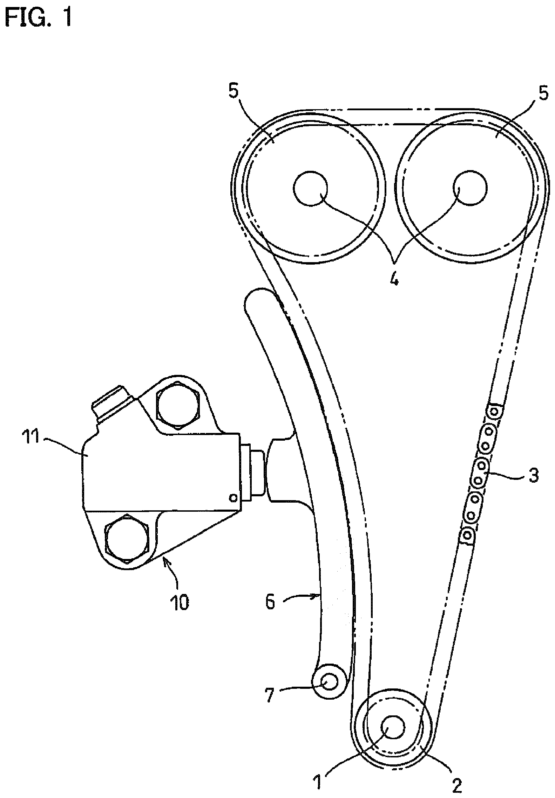

Embodiments of a chain tensioner according to the present invention are described below with reference to Figs. 1 to 10.

Fig. 1 exemplifies a chain system for driving camshafts 4 of an engine in which the chain tensioner 10 of the present invention is used.

This chain system is configured such that the rotation of a sprocket 2 attached to a crankshaft 1 is transmitted through a chain 3 to sprockets 5 attached to the respective camshafts 4.

A slipper 6 pivotable about a fulcrum shaft 7 is kept in contact with the loose side of the chain 3, and is pressed by the chain tensioner 10 in the direction in which the chain is tensioned.

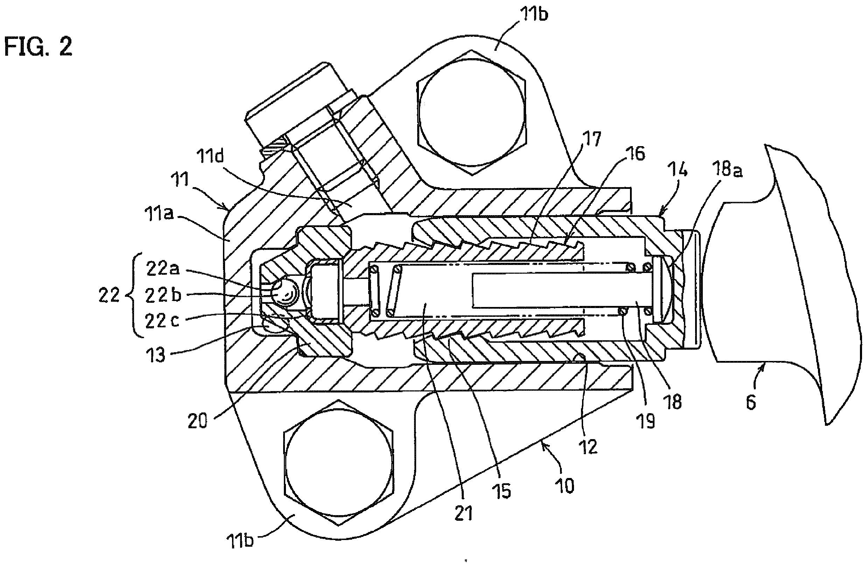

Fig. 2 illustrates the detailed structure of the chain tensioner 10. The chain tensioner 10 is mounted inside of the engine, and includes a housing 11 fixed to the cylinder block (not shown) of the engine.

The housing 11 includes a cylinder chamber 12 having an open end opposed to the slipper 6; and an oil supply passage 13 through which oil supplied from the engine is introduced into the cylinder chamber 12.

A tubular plunger 14 having a bottom, and including internal threads 15 on the inner surface of the plunger 14 is inserted in the cylinder chamber 12 with the open end of the plunger 14 located in the cylinder chamber 12.

Disposed inside of the plunger 14 are a hollow screw rod 16 including external threads 17 on its outer periphery, a spring seat 18, and a return spring 19.

The return spring 19 is compressed between the screw rod 16 and the spring seat 18, thereby biasing the plunger 14 in the direction in which the plunger 14 protrudes from the cylinder chamber 12.

A rod seat 20 is disposed between the screw rod 16 and a wall 11a of the housing 11 defining the deep end of the cylinder chamber 12, and one end of the screw rod 16 is supported by the rod seat 20. As illustrated in Fig. 2, the housing 11 includes brackets 11b through which the housing 11 is mounted and fixed to the outside of the cylinder block of the engine.

The spring seat 18 has a spherical surface 18a at its distal end. By bringing the spherical surface 18a into contact with the bottom wall of the plunger 14 at its closed end, it is possible to reduce the rotational resistance generated when the plunger 14 and the screw rod 16 rotate relative to each other.

A pressure chamber 21 is defined by the interior space of the screw rod 16 and the interior space of the plunger 14 which communicates with the interior space of the screw rod 16. A check valve 22 is mounted between the pressure chamber 21 and the oil supply passage 13 so as to close the oil supply passage 13 when the pressure in the pressure chamber 21 is higher than the pressure in the oil supply passage 13, thereby sealing the pressure chamber 21.

The shown check valve 22 includes a spherical valve element 22b; a valve seat 22a on the rod seat 20; and a retainer 22c retaining the valve element 22b within a valve chamber of the check valve 22.

The internal threads 15 are formed on the inner surface of the plunger 14 at its open end portion. The external threads 17 are formed on the substantially entire area of the outer periphery of the screw rod 16.

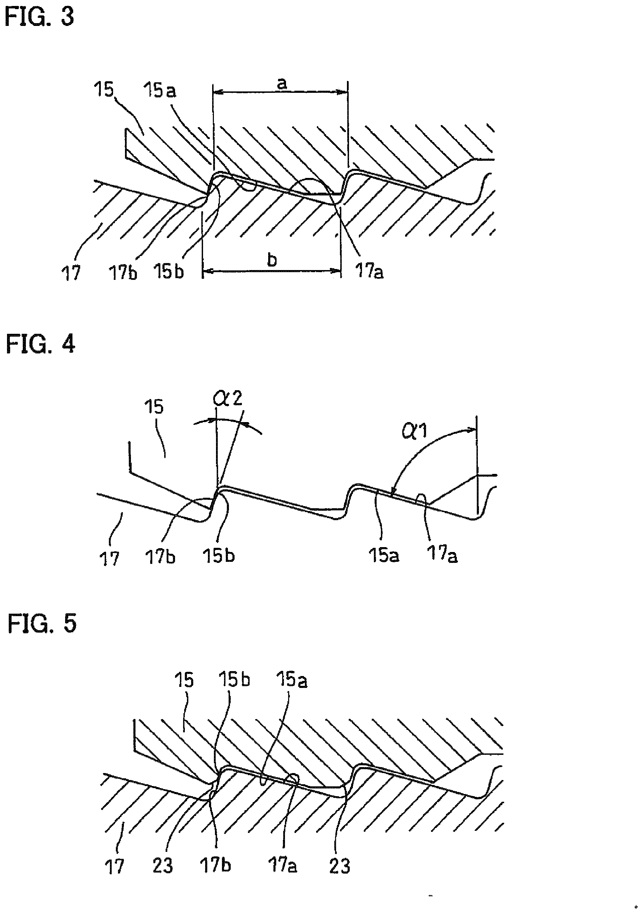

The internal threads 15 are serrated such that their plunger-pushed-in-side flank 15a, i.e., their flanks that abut the plunger-pushed-in-side flanks 17a of the external threads 17 when the plunger 14 is pushed into the cylinder chamber 12 (and as a result, the screw rod 16 is pushed into the plunger 14), have flank angles α1 (see Fig. 4) larger than the flank angles α2 of the plunger-protruding-side flanks 15b of the internal threads 15, i.e., their flanks that abut the plunger-protruding-side flanks 17b of the external threads 17 when the plunger 14 protrudes from the cylinder chamber 12 (and as a result, the screw rod 16 protrudes from the plunger 14).

Similarly, the external threads 17 are serrated such that the plunger-pushed-in-side flanks 17a have flank angles α1 (see Fig. 4) larger than the flank angles α2 of the plunger-protruding side flanks 17b.

The thus serrated internal and external threads 15 and 17 are threadedly engaged with each other. The present invention is characterized in that, as illustrated in Fig. 3, the pitch "a" of the internal threads 15 is smaller than the pitch "b" of the external threads 17.

In the shown chain tensioner, the flank angles α1 of the plunger-pushed-in side flanks 15a and 17a of the internal and external threads 15 and 17 are set at 64 to 76 degrees, whereas the flank angles α2 of the plunger-protruding side flanks 15b and 17b of the internal and external threads 15 and 17 are set at 6 to 16 degrees.

The larger the flank angles α1 of the plunger-pushed-in-side flanks 15a and 17a are, the more reliably the detent mechanism of the plunger functions when the oil supply from the engine is stopped. However, in order to increase the flank angles α1 without altering the pitches of the internal and external threads, it is necessary to reduce the heights of the internal and external threads. Therefore, the upper limits of the flank angles α1 of the plunger-pushed-in-side flanks 15a and 17a are preferably set within the range of 64 to 76 degrees or so, because if the flank angles α1 is higher than this range, the plunger might be unable to be pushed back while the engine is operating, resulting in the malfunction of the chain tensioner.

The upper limits of the flank angles α2 of the plunger-protruding side-flanks 15b and 17b are preferably set within the range of 6 to 16 degrees or so, because the larger the flank angles α2 are, the less smoothly the plunger 14 can protrude from the cylinder chamber 12.

The plunger 14 and the screw rod 16 of the exemplified chain tensioner 10 are both preferably made of SCM material or SCr material, but may be made of a different material.

As illustrated in Fig. 5, the internal threads 15 may include, as a countermeasure against machining burrs, chamfers 23 formed by removing the sharp distal edges of the internal threads 15.

By forming the chamfers 23, even if machining burrs are formed on the edges of the internal threads, the machining burrs will have no adverse effect on the external thread 17, specifically, the external threads 17 will be less likely to be caught on the machining burrs, so that the plunger 14 will be able to protrude from the cylinder chamber 12 in a smooth manner.

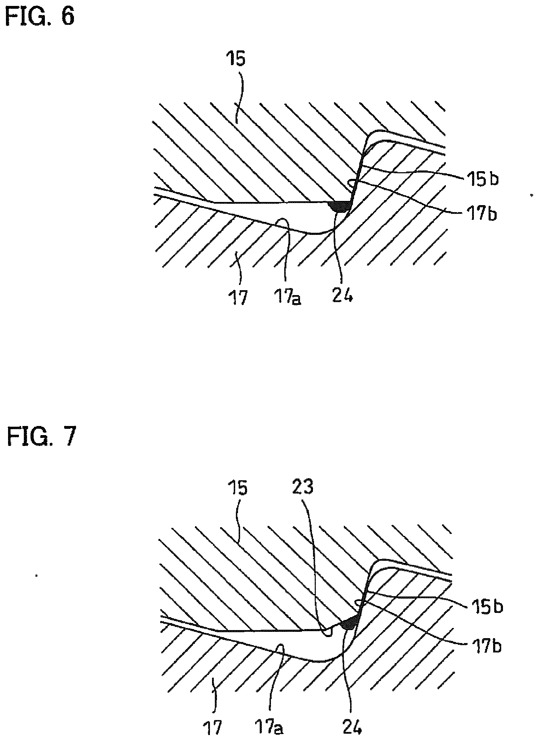

As illustrated in Fig. 6, a bulge (or bulges) 24 might be formed on the plunger-protruding-side flank 15b of at least one of the internal threads 15 when the internal threads 15 are formed by rolling. However, if the internal threads 15 have the chamfers 23, the bulge(s) 24 on at least one of the internal threads 15 will be formed on the boundary area between the chamfer 23 and the plunger-protruding-side flank 15b as illustrated in Fig. 7, so that the bulge(s) 24 will be less likely to interfere with the root of the external threads 17.

Each of Figs. 8 and 9 illustrates a modification of the above-described plunger 14. While the plunger 14 of the chain tensioner 10 illustrated in Fig. 2 comprises an integral member, the plungers 14 illustrated in Figs. 8 and 9 each comprises two separate parts combined together.

In view of strength, the plunger 14 is preferably manufactured by forming the internal threads on a cold-forged member. Also, the plunger 14, which is an elongated tubular member having a bottom, is preferably manufactured by joining two separate parts together rather than by machining an integral member.

The plunger 14 of Fig. 8 comprises a cold-forged cylindrical member 14a, and a cold-forged cap 14b liquid-tightly press-fitted and fixed to the cylindrical member 14a.

The plunger 14 of Fig. 9 comprises a cold-forged cylindrical member 14a, and a cold-forged cap 14b liquid-tightly fixed to the cylindrical member 14a by projection welding (at portions 14c). The plungers 14 of Figs. 8 and 9 can be produced at low cost with high mass productivity compared to a plunger comprising an integral member.

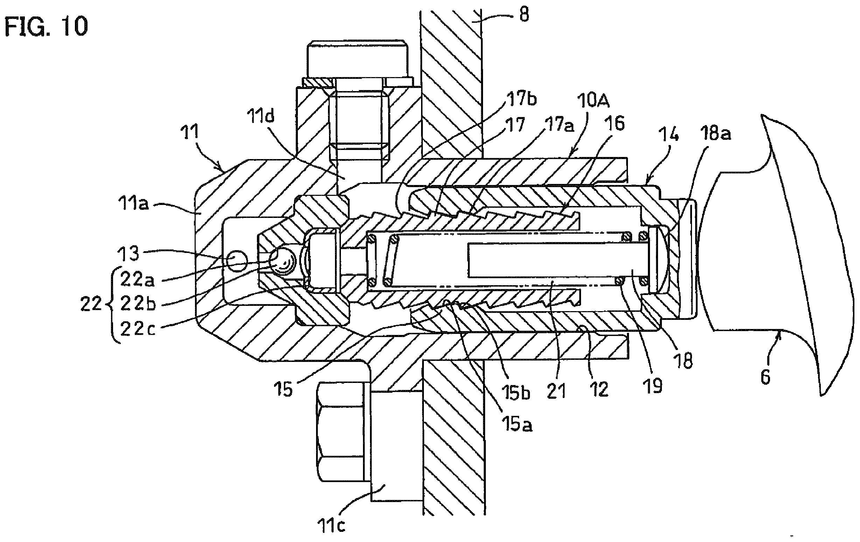

Fig. 10 illustrate a chain tensioner 10A according to another embodiment of the present invention which is mounted outside of the engine, with a portion of the housing 11 of the chain tensioner 10A inserted into the cylinder block 8 of the engine through a hole in the cylinder block 8. The chain tensioner 10A is configured such that the plunger 14 protrudes from the cylinder chamber 12 in the interior of the cylinder block 8, thereby pressing the slipper 6 in the direction in which the chain is tensioned.

The chain tensioner 10A shown in Fig. 10 is identical in basic structure to the chain tensioner 10 shown in Fig. 2, but is different from the chain tensioner 10 in that the brackets 11c are disposed at a different position to fix the housing 11 to the outside of the engine; and in that the air vent 11d of the housing 11 is directed in a different direction. Therefore, the same reference numerals are used for elements identical or corresponding to the elements of the chain tensioner 10 illustrated in Fig. 2, and their description is omitted.

### DESCRIPTION OF REFERENCE NUMERALS

1: crankshaft
2, 5: sprocket
3: chain
4: camshaft
6: slipper
7: fulcrum shaft
8: cylinder block
10, 10A: chain tensioner
11: housing
11a: wall defining the deep end of the cylinder chamber
11b, 11c: bracket through which the housing is mounted
11d: air vent
12: cylinder chamber
13: oil supply passage
14: plunger
14a: cylindrical member
14b: cap
14c: welded portion
15: internal thread
15a: plunger-pushed-in-side flank
15b: plunger-protruding-side flank
a: pitch of the internal thread
s: starting end of the internal thread at the open end of the plunger
e: starting end of the internal thread located near the closed end of the plunger
16: screw rod
17: external thread
17a: screw rod-pushed-in-side flank
17b: screw rod-protruding-side flank
b: pitch of the external thread
18: spring seat
18a: spherical surface
19: return spring
20: rod seat
21: pressure chamber
22: check valve
22a: valve seat
22b: valve element
22c: retainer
23: chamfer
24: bulge which might be formed when the internal thread is formed by rolling

## Claims

1. A chain tensioner comprising:
a housing (11) in which a cylinder chamber (12) is defined such that one end of the cylinder chamber (12) opens;
a tubular plunger (14) which includes a bottom, and an internal thread (15) on an inner portion of the tubular plunger (14), and which is inserted in the cylinder chamber (12) so as to be protrudable from the cylinder chamber (12);
a screw rod (16) including an external thread (17) on an outer periphery of the screw rod (16), and disposed inside of the tubular plunger (14);
a return spring (19) disposed between the screw rod (16) and the tubular plunger (14), and configured to bias the tubular plunger (14) in a direction in which the tubular plunger (14) protrudes from the cylinder chamber (12);
a pressure chamber (21) defined in a back portion of the tubular plunger (14) within the cylinder chamber (12);
an oil supply passage (13) communicating with the pressure chamber (21); and
a check valve (22) configured to close the oil supply passage (13) when a pressure in the pressure chamber (21) is higher than a pressure in the oil supply passage (13),
wherein the internal thread (15) and the external thread (17) have: a first plunger-pushed-in-side flank (15a) and a second plunger-pushed-in-side flank (17a), respectively, that are configured to abut against each other when the tubular plunger (14) is pushed into the cylinder chamber (12); and
a first plunger-protruding-side flank (15b) and a second plunger-protruding-side flank (17b), respectively, that are configured to abut against each other when the tubular plunger (14) protrudes from the cylinder chamber (12),
wherein the internal thread (15) is serrated such that a flank angle (α1) of the first plunger-pushed-in-side flank (15a) of the internal thread (15) is larger than a flank angle (α2) of the first plunger-protruding-side flank (15b) of the internal thread (15),
wherein the external thread (17) is serrated such that a flank angle (α1) of the second plunger-pushed-in-side flank (17a) of the external thread (17) is larger than a flank angle (α2) of the second plunger-protruding-side flank (17b) of the external thread (17), and
wherein the serrated internal and external threads (15 and 17) are threadedly engaged with each other,
**characterized in that** the internal thread (15) of the tubular plunger (14) has a pitch (a) smaller than a pitch (b) of the external thread (17) of the screw rod (16).

2. The chain tensioner according to claim 1, wherein the flank angles (α1) of the first and second plunger-pushed-in-side flanks (15a and 17a) of the internal and external threads (15 and 17) are set at 64 to 76 degrees, and the flank angles (α2) of the first and second plunger-protruding-side flanks (15b and 17b) of the internal and external threads (15 and 17) are set at 6 to 16 degrees.

3. The chain tensioner according to claim 1 or 2, wherein the tubular plunger (14) is constituted by two parts combined together.

4. The chain tensioner according to claim 3, wherein the two parts comprise:
a cylindrical member (14a) having an opening at one end of the cylindrical member (14a); and
a cap (14b) liquid-tightly press-fitted and fixed to the cylindrical member (14a) so as to close the opening of the cylindrical member (14a).

5. The chain tensioner according to claim 3, wherein the two parts comprise:
a cylindrical member (14a) having an opening at one end of the cylindrical member (14a); and
a cap (14b) liquid-tightly welded and fixed to the cylindrical member (14a) so as to close the opening of the cylindrical member (14a).

6. The chain tensioner according to any of claims 1 to 5, wherein the housing (11) includes a bracket (11b) through which the housing (11) is mounted inside of a cylinder block of an engine.

7. The chain tensioner according to any of claims 1 to 5, wherein the housing (11) includes a bracket (11c) through which the housing (11) is mounted outside of a cylinder block of an engine.

## Patentansprüche

1. Kettenspanner, der umfasst:
ein Gehäuse (11), in dem eine Zylinderkammer (12) so ausgebildet ist, dass sich ein Ende der Zylinderkammer (12) öffnet;
einen röhrenförmigen Kolben (14), der einen Boden sowie ein Innengewinde (15) an einem inneren Abschnitt des röhrenförmigen Kolbens (14) enthält und der in die Zylinderkammer (12) so eingeführt ist, dass er aus der Zylinderkammer (12) austreten kann;
eine Gewindestange (16), die ein Außengewinde (17) an einem Außenumfang der Gewindestange (16) enthält und im Inneren des röhrenförmigen Kolbens (14) angeordnet ist;
eine Rückstellfeder (19), die zwischen der Gewindestange (16) und dem röhrenförmigen Kolben (14) angeordnet und so ausgeführt ist, dass sie den röhrenförmigen Kolben (14) in einer Richtung vorspannt, in der der röhrenförmige Kolben (14) aus der Zylinderkammer (12) austritt;
eine Druckkammer (21), die in einem hinteren Abschnitt des röhrenförmigen Kolbens (14) im Inneren der Zylinderkammer (12) ausgebildet ist;
einen Ölzuführ-Kanal (13), der mit der Druckkammer (21) in Verbindung steht; und
ein Rückschlagventil (22), das so ausgeführt ist, dass es den Ölzuführ-Kanal (13) schließt, wenn ein Druck in der Druckkammer (21) höher ist als ein Druck in dem Ölzuführ-Kanal (13),
wobei das Innengewinde (15) und das Außengewinde (17) eine erste Flanke (15a) an der Kolbeneinschub-Seite bzw. eine zweite Flanke (17a) an der Kolbeneinschub-Seite, die so ausgeführt sind, dass sie aneinander anliegen, wenn der röhrenförmige Kolben (14) in die Zylinderkammer (12) eingeschoben wird; sowie
eine erste Flanke (15b) an der Kolbenaustritts-Seite bzw. eine zweite Flanke (17b) an der Kolbenaustritts-Seite aufweisen, die so ausgeführt sind, dass sie aneinander anliegen, wenn der röhrenförmige Kolben (14) aus der Zylinderkammer (12) austritt,
wobei das Innengewinde (15) so gezahnt ist, dass ein Flankenwinkel (α1) der ersten Flanke (15a) des Innengewindes (15) an der Kolbeneinschub-Seite größer ist als ein Flankenwinkel (α2) der ersten Flanke (15b) des Innengewindes (15) an der Kolbenaustritts-Seite,
wobei das Außengewinde (17) so gezahnt ist, dass ein Flankenwinkel (α1) der zweiten Flanke (17a) des Außengewindes (17) an der Kolbeneinschub-Seite größer ist als ein Flankenwinkel (α2) der zweiten Flanke (17b) des Außengewindes (17) an der Kolbenaustritts-Seite
wobei das Innen- und das Außengewinde (15 und 17), die gezahnt sind, miteinander in Gewindeeingriff sind,
**dadurch gekennzeichnet, dass** das Innengewinde (15) des röhrenförmigen Kolbens (14) eine Steigung (a) hat, die kleiner ist als eine Steigung (b) des Außengewindes (17) der Gewindestange (16).

2. Kettenspanner nach Anspruch 1, wobei die Flankenwinkel (α1) der ersten und der zweiten Flanke (15a und 17a) des Innen- und des Außengewindes (15 und 17) an der Kolbeneinschub-Seite auf 64° bis 76°eingestellt sind und die Flankenwinkel (α2) der ersten und der zweiten Flanke (15b und 17b) des Innen- und des Außengewindes (15 und 17) an der Kolbenaustritts-Seite auf 6° bis 16° eingestellt sind.

3. Kettenspanner nach Anspruch 1 oder 2, wobei der röhrenförmige Kolben (14) aus zwei miteinander verbundenen Teilen besteht.

4. Kettenspanner nach Anspruch 3, wobei die zwei Teile umfassen:
ein zylindrisches Element (14a) mit einer Öffnung an einem Ende des zylindrischen Elementes (14a); sowie
eine Kappe (14b), die flüssigkeitsundurchlässig in das zylindrische Element (14a) eingepresst und daran befestigt ist, um die Öffnung des zylindrischen Elementes (14a) zu verschließen.

5. Kettenspanner nach Anspruch 3, wobei die zwei Teile umfassen:
ein zylindrisches Element (14a) mit einer Öffnung an einem Ende des zylindrischen Elementes (14a); sowie
eine Kappe (14b), die flüssigkeitsundurchlässig an dem zylindrischen Element (14a) angeschweißt und daran befestigt ist, um die Öffnung des zylindrischen Elementes (14a) zu verschließen.

6. Kettenspanner nach einem der Ansprüche 1 bis 5, wobei das Gehäuse (11) eine Halterung (11b) enthält, über die das Gehäuse (11) im Inneren eines Zylinderblocks eines Motors montiert ist.

7. Kettenspanner nach einem der Ansprüche 1 bis 5, wobei das Gehäuse (11) eine Halterung (11c) enthält, über die das Gehäuse (11) im Inneren eines Zylinderblocks eines Motors montiert ist.

## Revendications

1. Tendeur de chaîne comprenant :
un boîtier (11) dans lequel est définie une chambre de vérin (12) de telle sorte que s'ouvre une extrémité de la chambre de vérin (12) ;
un plongeur tubulaire (14) qui comprend un fond et un filetage interne (15) sur une portion interne du plongeur tubulaire (14), et qui est inséré dans la chambre de vérin (12) de manière à pouvoir saillir de la chambre de vérin (12) ;
une tige de vis (16) comprenant un filetage externe (17) sur une périphérie externe de la tige de vis (16), et disposée à l'intérieur du plongeur tubulaire (14) ;
un ressort de retour (19) disposé entre la tige de vis (16) et le plongeur tubulaire (14), et configuré pour contraindre le plongeur tubulaire (14) dans une direction où le plongeur tubulaire (14) fait saillie de la chambre de vérin (12) ;
une chambre de pression (21) définie dans une portion arrière du plongeur tubulaire (14) dans la chambre de vérin (12) ;
un passage d'alimentation d'huile (13) qui communique avec la chambre de pression (21) ; et
un clapet antiretour (22) configuré pour fermer le passage d'alimentation d'huile (13) quand une pression dans la chambre de pression (21) est supérieure à la pression dans le passage d'alimentation d'huile (13),
dans lequel le filetage interne (15) et le filetage externe (17) ont : un premier flanc côté plongeur poussé (15a) et un deuxième flanc côté plongeur poussé (17a), respectivement, qui sont configurés pour venir à butée l'un contre l'autre quand le plongeur tubulaire (14) est poussé dans la chambre de vérin (12) ; et
un premier flanc côté plongeur saillant (15b) et un deuxième flanc côté plongeur saillant (17b), respectivement, qui sont configurés pour venir à butée l'un contre l'autre quand le plongeur tubulaire (14) fait saillie de la chambre de vérin (12),
dans lequel le filetage interne (15) est dentelé de telle sorte que l'angle de flanc (α1) du premier flanc côté plongeur poussé (15a) du filetage interne (15) est supérieur à l'angle de flanc (α2) du premier flanc côté plongeur saillant (15b) du filetage interne (15),
dans lequel le filetage externe (17) est dentelé de telle sorte que l'angle de flanc (α1) du deuxième flanc côté plongeur poussé (17a) du filetage externe (17) est supérieur à l'angle de flanc (α2) du deuxième flanc côté plongeur saillant (17b) du filetage externe (17), et
dans lequel les filetages interne et externe dentelés (15 et 17) sont engagés entre eux par filetage,
**caractérisé en ce que** le filetage interne (15) du plongeur tubulaire (14) présente un pas (a) inférieur au pas (b) du filetage externe (17) de la tige de vis (16).

2. Tendeur de chaîne selon la revendication 1, dans lequel les angles de flanc (α1) des premier et deuxième flancs côté plongeur poussé (15a et 17a) des filetages interne et externe (15 et 17) sont réglés entre 64 et 76 degrés, et les angles de flanc (α2) des premier et deuxième flancs côté plongeur saillant (15b et 17b) des filetages interne et externe (15 et 17) sont réglés entre 6 et 16 degrés.

3. Tendeur de chaîne selon la revendication 1 ou 2, dans lequel le plongeur tubulaire (14) est constitué de deux parties combinées.

4. Tendeur de chaîne selon la revendication 3, dans lequel les deux parties comprennent :
un élément cylindrique (14a) ayant une ouverture à une extrémité de l'élément cylindrique (14a) ; et
un capuchon (14b) serti de manière étanche aux liquides et fixé à l'élément cylindrique (14a) de manière à fermer l'ouverture de l'élément cylindrique (14a).

5. Tendeur de chaîne selon la revendication 3, dans lequel les deux parties comprennent :
un élément cylindrique (14a) ayant une ouverture à une extrémité de l'élément cylindrique (14a) ; et
un capuchon (14b) soudé de manière étanche aux liquides et fixé à l'élément cylindrique (14a) de manière à fermer l'ouverture de l'élément cylindrique (14a).

6. Tendeur de chaîne selon l'une quelconque des revendications 1 à 5, dans lequel le boîtier (11) comprend un support (11b) via lequel le boîtier (11) est monté à l'intérieur du bloc-moteur d'un moteur.

7. Tendeur de chaîne selon l'une quelconque des revendications 1 à 5, dans lequel le boîtier (11) comprend un support (11c) via lequel le boîtier (11) est monté à l'extérieur du bloc-moteur d'un moteur.
